# EUROPEAN PATENT SPECIFICATION

(11) **EP 0 333 392 B1**
(45) Date of publication and mention of the grant of the patent: **10.05.1995**
(21) Application number: 89302408.3
(22) Date of filing: 10.03.1989
(51) Int. Cl.: G02F 1/133, H01C 7/10

(54) **Electro-optical device**
Elektrooptische Vorrichtung
Dispositif électro-optique

(30) Priority: 17.03.1988 JP 64379/88; 23.01.1989 JP 13415/89
(43) Date of publication of application: 20.09.1989
(73) Proprietor: SEIKO INSTRUMENTS INC., Tokyo 136 (JP)
(72) Inventor: Kuroda, Yoshimi, Koto-ku Tokyo (JP)
(74) Representative: Sturt, Clifford Mark

(56) References cited:
- EP-A- 0 202 092
- US-A- 4 667 189
- JOURNAL OF NON-CRYSTALLINE SOLIDS, vol. 77-78, pt. 1, 11th December 1985, pp. 575-578, Elsevier Science Publishers B.V., Amsterdam, NL; C. MANFREDOTTI et al.: "Hydrogen content and optical properties of LPCVD amorphous silicon films"

## Description

The present invention relates to an electro-optical device, of the type comprising a substrate and a plurality of pixels provided with switching elements on said substrate, each switching element comprising amorphous material consisting principally of silicon.

The invention also relates to a method of producing an electro-optical device, of the type comprising forming a plurality of pixels on a substrate and forming a plurality of switching elements, said switching elements having amorphous material consisting principally of silicon on said substrate.

An electro-optical device of the aforesaid type is disclosed in EP 0 202 092, in which a liquid crystal display device comprises two opposing substrates, a layer of liquid crystal material between the substrates, a row of electrodes formed on the surfaces of the substrate and column electrodes formed on the inner surface of the other substrate, along with pixel electrodes and non-linear resistive elements formed on the substrate, connected in series with one another.

A non-linear resistive element and an amorphous silicon thin film transistor (TFT) using a silicon nitride film, a silicon oxide film, a silicon nitride-oxide film or a silicon carbide film as a non-linear resistive thin film, are described in JP-A-90192/1986 and JP-A-94086/1986.

Since these electro-optical switching elements, using amorphous silicon as the base material, are formed by chemical reaction between different gases in a plasma chemical vapour deposition (CVD) apparatus to deposit a film, hydrogen is unavoidably introduced into the base of the amorphous silicon film. To produce a non-linear resistive element having SiNₓ (N/Si = 0.4 to 0.8), for example, an SiH₄ gas is reacted chemically with an N₂ gas or an NH₃ gas to form a film, so that the decomposed component of the SiH₄ gas or the H component of the NH₃ is unavoidably introduced in an amount of 10 to 20% into the resulting SiNₓ film. When a non-linear resistance element of SiOₓ is formed, too, the SiH₄ gas is used likewise, so that 10 to 20% of the decomposed H component of the SiH₄ gas is introduced into the SiOₓ film.

Since a switching element using H-containing amorphous silicon (hereinafter referred to as "a-Si:H") as the base material exhibits a photo-electrical effect peculiar to a-Si:H, the electrical characteristics of the element change depending on the environment (brightness and darkness) around the element.

According to the present invention, there is therefore provided an electro-optical device comprising a plurality of pixels provided with switching elements, each switching element using amorphous silicon as its base material characterised in that the said amorphous silicon base material of each switching element contains no hydrogen or has a hydrogen content of not more than 1% by weight.

As a result of the fact that the said base material contains no hydrogen or has a hydrogen content of not more than 1% by weight, an electro-optical device can be provided in which the above-mentioned photo-electrical effect does not occur, so that the device is stable and reliable.

Preferably, the switching elements are non-linear resistance elements or TFT elements.

The device preferably comprises first and second substrates which face each other, electrodes of the said pixels and the said switching elements being carried on inner surfaces of the respective substrates; an electro-optical layer between the first and second substrates; and at least one polarizing member through which the device is viewed.

The electro-optical layer preferably comprises a layer of liquid crystal material.

Each of the substrates may have a plurality of row electrodes and a plurality of column electrodes on the inner surface thereof, the second substrate also having pixel electrodes and non-linear resistance elements on its inner surface.

The said amorphous silicon base material may consist substantially of SiNₓ or SiC_{y} or SiO_{z} or of Si, N and O.

The basic material may be Si-rich compared with the stoichiometric ratio.

The amorphous silicon has preferably been deposited on a substrate by sputtering.

The sputtering may be effected by reactive sputtering using a target of silicon and a gas.

The gas may contain N, O or C.

The target may be made of single crystal silicon, polycrystal silicon or silicon oxide.

Preferably, the row and column electrodes, the pixel electrodes and the non-linear resistance elements are deposited on the second substrate by sputtering.

The invention also comprises a method of producing an electro-optical device comprising forming a plurality of pixels provided with switching elements on a substrate, each switching element using amorphous silicon as its base material characterised in that the amorphous silicon base material of each switching element contains no hydrogen or has a hydrogen content of not more than 1% by weight, the base material being sputtered onto the substrate.

The invention is illustrated, merely by way of example, in the accompanying drawings, in which:-
Figure 1 is a plan view of a part of an electro-optical device according to the present invention;
Figure 2 is a sectional view of a non-linear resistance element forming part of the device shown in Figure 1;
Figure 3 is a graph showing the I-V characteristic of a non-linear resistance film using a known a-Si:H material as its base material;
Figure 4 is a graph showing the I - V characteristic of a non-linear resistance film using a hydrogen-free amorphous silicon as its base material;
Figure 5 is a perspective view of a part of a liquid crystal display according to the present invention;
Figure 6 is a longitudinal sectional view of a pixel of a liquid crystal display incorporating the part shown in Figure 5;
Figure 7 is a circuit diagram of a liquid crystal display using non-linear resistance elements;
Figure 8 is an equivalent circuit diagram of one pixel of the liquid crystal display of Figure 6;
Figures 9(A) and 9(B) show examples of the waveform applied between the liquid crystal and the non-linear resistance element AC of the pixel of Figure 8 at the time of ON and the voltage applied between the liquid crystals BC thereof at that time.
Figures 10(A) and 10(B) show examples of the voltages applied between AC and between BC of Figure 8 at the time of OFF;
Figure 11 is a production step block diagram showing an embodiment of the method of the present invention;
Figure 12 is a block diagram showing an example of production steps of the prior art;
Figure 13 is a diagram showing asymmetry of the voltage-v-current characteristics of a non-linear resistance element;
Figure 14 shows the voltage-v-current characteristics of a non-linear resistance element when the flow rate of Ar + N₂ gas is changed;
Figure 15 shows the voltage-v-current characteristics of a non-linear resistance element when RF power is changed;
Figure 16 shows voltage-v-transmittance characteristics of the liquid crystal display according to an embodiment of the present invention; and
Figure 17 is a diagram showing the voltage shift characteristics of a liquid crystal display according to an embodiment of the present invention.

Terms such as "upper" and "lower", as used in the description below, are to be understood to refer merely to directions as seen in the accompanying drawings.

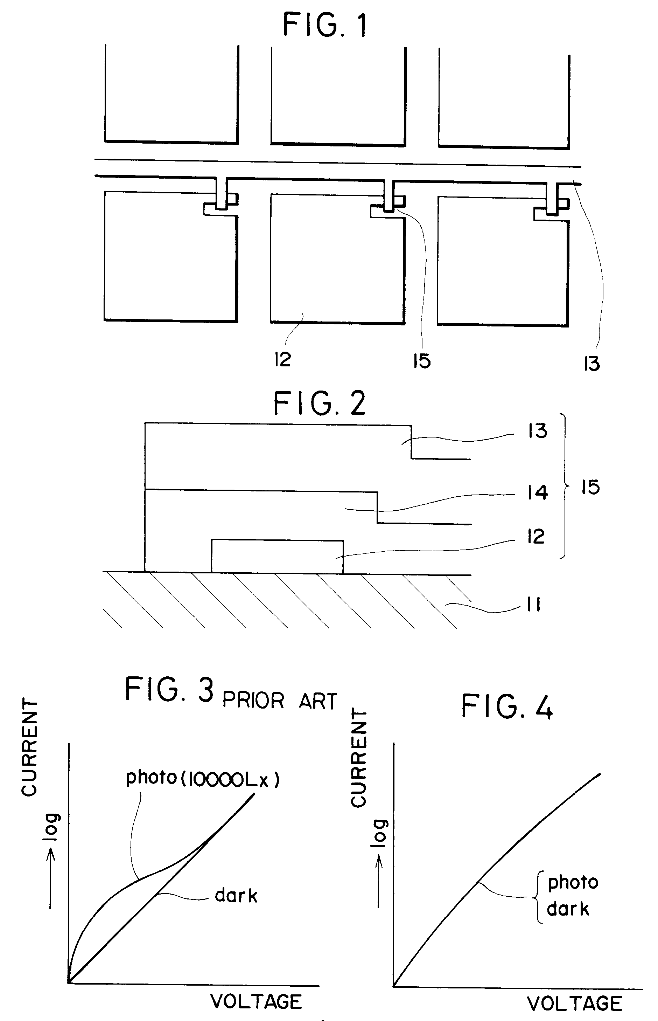

In Figures 1 and 2 there is shown part of an electro-device according to the present invention comprising a transparent substrate 11 on which are formed a plurality of non-linear resistance elements 15 each of which comprises successive layers of a transparent pixel electrode 12, a non-linear resistance film 14, and a metallic wiring electrode 13.

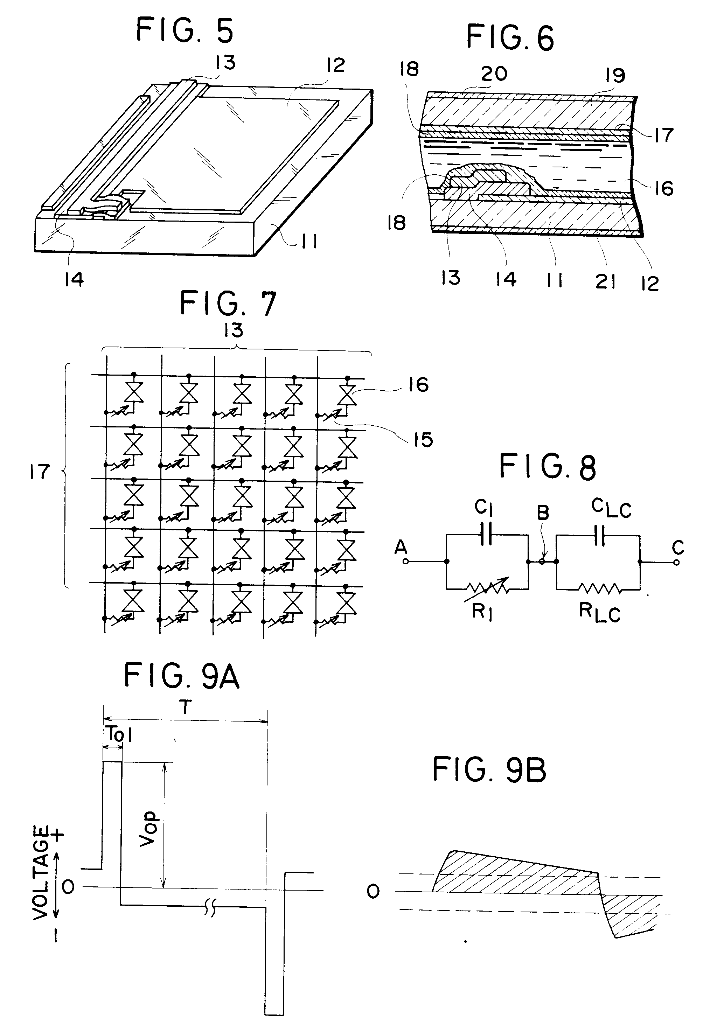

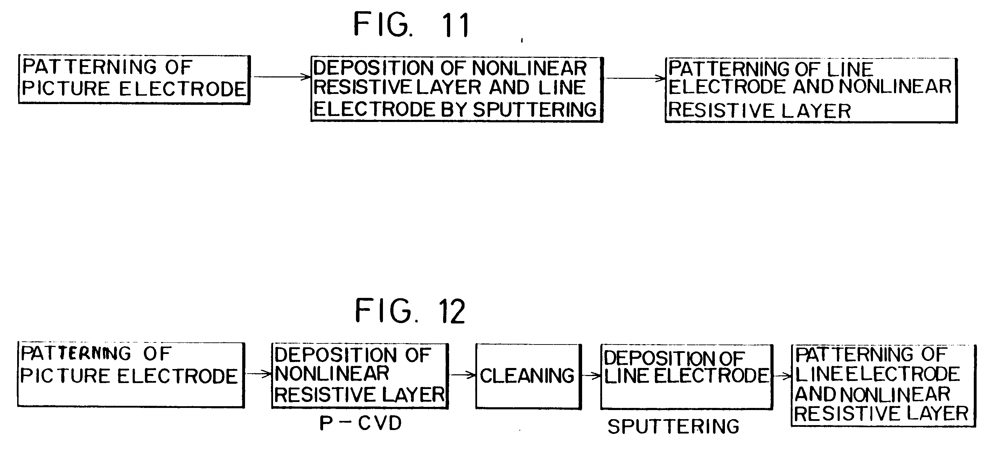

If, in contrast to the present invention, the non-linear resistance film 14 uses a-Si:H as its base material, the voltage-v-current characteristics between the wiring electrode 13 and the transparent pixel electrode 12 change depending on the brightness and darkness around the element as shown in Figure 3. If such a non-linear resistance film 14 employing a-Si-H as its base material is used for a liquid crystal display such as that shown in Figure 6, a difference of contrast occurs between a bright environment and a dark environment for the reasons indicated below.

Figure 7 is a circuit diagram of a matrix liquid display panel device using non-linear resistance elements 15, Figure 7 showing the metallic wiring electrodes 13 which form row electrodes, transparent column electrodes 17, and a liquid crystal layer 16 of a pixel.

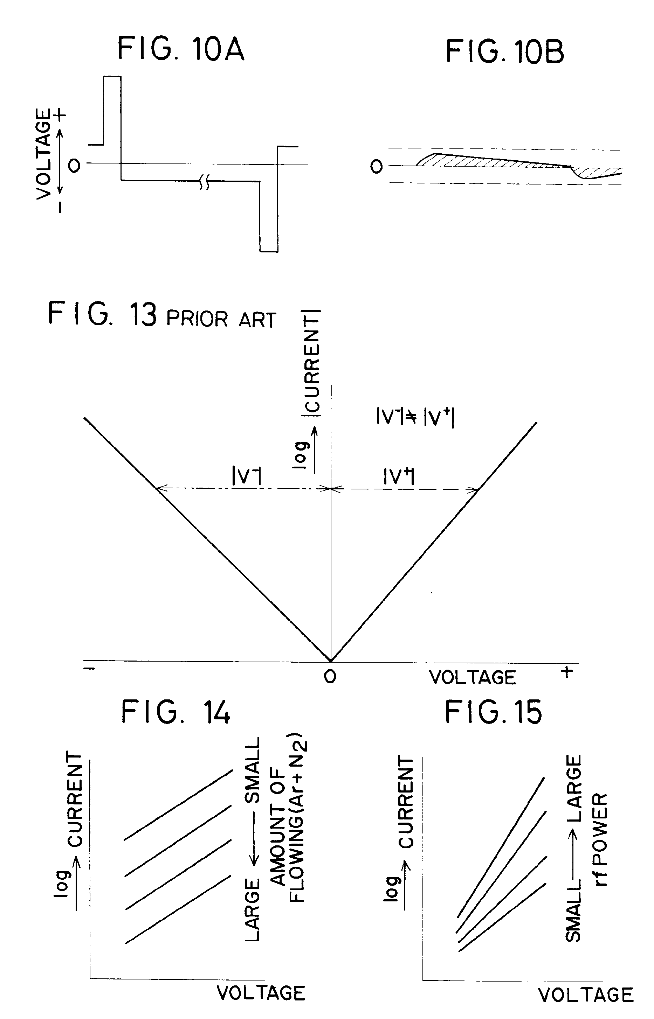

Figure 8 is an equivalent circuit diagram of one pixel in which symbols C₁ and R₁ represent the capacitor capacity and resistance of each non-linear resistance element 15, C_{LC} and R_{LC} represent the capacitor capacity and resistance of each liquid crystal pixel. The driving waveform in the matrix liquid crystal panel shown in Figure 7 is a time division driving waveform shown in Figures 9(A) and 10(A) by way of example. When a voltage Vₒₚ is applied between points A and C of Figure 8, that is, between the non-linear resistance element 15 and the liquid crystal pixel 16, for a period Tₒ , the charge is stored in the capacitor C_{LC} of the liquid crystal pixel and, thereafter, a voltage is applied between A and B and between B and C due to resistance division by R₁ and R_{LC} for the period T - Tₒ. If the resistance of R₁ is low in the period T - Tₒ, the charge stored in C_{LC} in the period Tₒ leaks from B to A, that is, through the non-linear resistance element 15. In short, the area of the shaded portions at the lower parts of Figures 9(B) and 10(B) changes with R₁. If the value of R₁ is small, the area of the shaded portions is small and the voltage applied between B and C, that is, the voltage applied to the liquid crystal pixel, is small. Therefore, in the case of a liquid crystal display whose non-linear resistance element 15 has the electrical characteristic shown in Figure 3, the resistance value R₁ changes in a dark/bright environment in the low voltage region in the period T - Tₒ so that the voltage value applied to the liquid crystal pixel changes and a difference of contrast consequently occurs. In the worst case, characters that have been displayed in the dark environment would disappear and could not be seen if they are abruptly moved to a bright environment. Figures 10(A) and 10(B) show an example of a waveform applied between A and C and a waveform of the B - C voltage at the time of OFF.

In an electro-optical device according to the present invention, however, the non-linear resistance films 14 contain no hydrogen or have a hydrogen content of not more than 1% by weight. Consequently, there can be obtained an extremely stable and highly reliable electro-optical device which is free from the photo-electrical effect, can prevent a drop in contrast in a bright environment as well as a change of electrical characteristics which are believed to result from the presence of hydrogen when the device is operated for a long period.

Figure 5 is a perspective view of only one pixel. In Figure 5, the liquid crystal layer, opposed substrate for sealing the liquid crystal layer, and polarization plate, etc., are omitted to simplify illustration.

Figure 6 is a longitudinal sectional view of one pixel of a liquid crystal display in accordance with the present invention.

The structure shown in Figure 5 comprises a transparent substrate 11 which is made of ordinary glass such as soda glass, Pyrex glass, etc. on which is mounted a transparent pixel electrode 12. The transparent pixel electrode 12 is formed by depositing an indium tin oxide film (ITO) by magnetron sputtering, deposition, or the like, in a thickness of from about 100 Å to 500 Å (10⁻⁸m to 5 x 10⁻⁸m) on the entire surface of the transparent substrate 11 and then patterning it in a predetermined shape by photo-etching.

Also mounted in part on the transparent substrate 11 and in part on the transparent pixel electrode 12 is a non-linear resistance thin film 14 comprising amorphous material consisting principally of silicon. An about 750 to 1,500 Å thick (7.5 x 10⁻⁸m to 15 x 10⁻⁸m) silicon nitride film hardly containing any H is deposited by reactive sputtering by the use of a target of silicon single crystal or silicon polycrystal material, an argon gas containing about 5 to 15% of nitrogen gas and a magnetron sputtering apparatus. An about 750 to 1,500 Å thick (7.5 x10⁻⁸ m to 15 x 10⁻⁸m) amorphous silicon oxide film (SiO₂) containing substantially no hydrogen is deposited by reactive sputtering using a target of silicon single crystal, silicon polycrystal or silicon oxide material and an argon gas containing about 1 to 10% of oxygen gas. Mounted on the non-linear resistance thin film 14 is a metallic wiring electrode 13, which constitutes one side of the row-column electrodes.

In this embodiment, aluminium, silicon or chromium metal is deposited continuously in a thickness of from about 1,000 to 8,000 Å (10⁻⁷m to 8 x 10⁻⁷m) on the non-linear resistance thin film 14 inside the same or in a separate chamber by magnetron sputtering. Next, the metallic wiring electrode 13 is patterned in a predetermined shape by photo-etching and then the non-linear resistance thin film 14 is patterned in a predetermined shape by photo-etching. In this embodiment the metallic wiring electrode 13 is removed selectively by photo-etching and then the non-linear resistance thin film 14 is etched and removed selectively without removing the photosensitive resin employed as a photoresist. In other words, two photo-masks are used and etching steps are effected three times.

Figure 11 is a block diagram of the steps described above which should be compared with Figure 12 which shows the steps used in the formation of a non-linear resistance element using a-Si:H (a-Si containing H) as its base material. The steps used in the formation of an a-Si:H base non-linear resistance element when a plasma CVD apparatus is employed in accordance with the prior art include a first step of depositing a transparent pixel electrode by magnetron sputtering or deposition and patterning it by photo-etching; a second step of raising the substrate temperature above 300°C inside the plasma CVD apparatus and depositing a non-linear resistance thin film of silicon nitride film by silane gas and nitrogen gas or ammonia gas; a third step of withdrawing the substrate from the plasma CVD apparatus and washing it; a fourth step of depositing a metal wiring electrode on this substrate by magnetron sputtering; and a fifth step of patterning the metallic wiring electrode and the non-linear resistance thin film thus deposited by photo-etching. When the plasma CVD apparatus is employed for forming the non-linear resistance thin film, an H component is unavoidably introduced into the non-linear resistance thin film so that the resulting device has only inferior electrical characteristics. In accordance with the formation steps of the present invention, however, since the non-linear resistance film 14 may be formed by sputtering, it is possible to prevent substantially any introduction of hydrogen. It is possible to effect reactive sputtering by use of a target made of silicon and by employing argon gas containing oxygen gas in the sputtering apparatus, to deposit the non-linear resistance thin film 14 and to continuously deposit the metallic wiring electrode 13 by magnetron sputtering after the first step of depositing the transparent pixel electrode 12 by magnetron sputtering, deposition or the like as shown in Figure 11. This makes it possible to eliminate the prior art steps of withdrawing the substrate after the deposition of the a-Si:H base non-linear resistance thin film from the CVD apparatus; the step of washing the substrate after withdrawal; and the step of placing the substrate in the sputtering apparatus and evacuating it in order to deposit the wiring electrode. In this way the production time can be reduced drastically. Since the possibility of the introduction of any impurity can thus be reduced drastically, the number of defective products can be reduced and the production yield can be improved.

If the wiring electrode 13 and the non-linear resistance thin film 14 have the same shape, they can be etched continuously by use of the same exposure mask and the same photosensensitive resin and by so doing, the steps from deposition of the non-linear resistance film to patterning of the wiring electrode and the non-linear resistance film, that have required seven to eight hours conventionally, can be completed within about four to five hours, thereby reducing the time required for the production steps.

A liquid crystal display according to the present invention may thus have a plurality of pixels as shown in Figure 6 and comprise first and second, or upper and lower, substrates 19, 11 which face each other with an electro-optical layer constituted by a liquid crystal layer 16 therebetween. The liquid crystal layer 16 is 5 to 7 »m thick and uses a twist nematic material. Orientation films 18 using a polyimide film because of its dielectric constant and resistance are provided on the upper and lower sides of the liquid crystal layer 16. A transparent conductive film 17 (ITO) constituting one of the column-row electrode groups is mounted on the upper orientation film 18. The upper substrate comprises a transparent substrate 19 which uses the same kind of glass as that of the lower transparent substrate 11 and is mounted on the transparent conductive film 17. The liquid crystal display device has upper and lower polarization plates 20, 21. The axes of polarization of the upper and lower polarization plates 20 and 21 deviate by about 90°.

Figure 4, as indicated above, shows the voltage-v-current characteristics when the ITO electrode 12 is grounded and a voltage is applied to the metallic wiring electrode 13 in the non-linear resistance element formed by laminating ITO as the transparent pixel electrode, the silicon nitride film which contains substantially no hydrogen as the non-linear resistance thin film, and aluminium, silicon or chromium as the wiring electrode in accordance with the present invention. Figure 3, as indicated above, shows the voltage-v-current characteristics of the non-linear resistance element which has the same structure as above but whose silicon nitride film is formed by CVD using silane gas and nitrogen gas or ammonia gas. The ordinate in each of Figures 3 and 4 represents the current on a logarithmic scale.

As can be seen clearly from Figures 3 and 4, the resistance drops in a bright environment in the low voltage range due to the photo-electrical effect in the case of a non-linear resistance element using H-containing a-Si as its base material and formed by plasma CVD, but no such phenomenon occurs in the case of a non-linear resistance element containing substantially no hydrogen and formed by sputtering. If the hydrogen content is not more than 1 wt%, the photo-electrical effect described above hardly occurs. The same result can be obtained when a silicon oxide film is used as the non-linear resistance thin film. In other words, any adverse influences due to the photo-electrical effect hardly occur when an amorphous SiOₓ containing hardly any hydrogen is formed by sputtering and used as a switching device of the electro-optical device.

Therefore, if a non-linear resistance element having characteristics such as shown in Figure 3 is used for a liquid crystal device such as shown in Figure 6, a difference of contrast occurs between a bright environment and a dark environment, but when a non-linear resistance element having characteristics such as shown in Figure 4 is used, hardly any difference of contrast occurs and a substantially stable display state is maintained.

When the a-Si:H base non-linear resistance film is deposited by use of plasma CVD in accordance with the prior art, a difference in the electrical characteristics occurs due to the adhesion strength between the interface of the pixel electrode metal- non-linear resistance film and the interface of the non-linear resistance film - wiring electrode and asymmetry occurs in the voltage-v-current characteristics (see Figure 13). In other words, even if the same voltage is applied to the pixel electrode metal and the wiring electrode, the value of the current flowing through the non-linear resistance element changes depending on positive or negative polarity. If such a non-linear resistance element is used for a liquid crystal display, a D.C.. component is likely to remain inside the liquid crystal display and to result in non-uniform display such as charging-up. However, if an a-Si base non-linear resistance film containing hardly any H (H < 1 wt%) is deposited by sputtering as in this embodiment, it becomes possible to completely eliminate asymmetry in the voltage-v-current characteristics such as shown in Figure 13 (|V⁺| = |V⁻| ). Accordingly, non-uniform display such as charging-up does not occur, and a liquid crystal display having an extremely good display state can be obtained.

Figure 14 shows the voltage-v-current characteristics when the flow rate of an Ar+N₂ gas is changed while RF power is kept constant in a non-linear resistance element of the type wherein the silicon nitride film is formed by reactive sputtering using silicon as the target and an Ar+N₂ gas containing 1 to 10% of N₂ gas, and is sandwiched between ITO and Cr. Figure 15 shows the voltage-v-current characteristics when the RF power is changed while the flow rate of the Ar+N₂ gas is kept constant when forming a similar non-linear resistance element. As can be understood from Figure 14, the resistance of the resulting non-linear resistance element can be changed by changing the flow rate of the Ar+N₂ gas and, as will be appreciated, the smaller the flow rate, the richer the silicon and the lower the resistance. As can be understood from Figure 15, the flow of the current in the case of the non-linear resistance element can be increased exponentially by changing the power of the RF, and the characteristics of the non-linear resistance element can be changed freely. The greater the RF power, the greater the sputtering ratio of the silicon target,and the resulting non-linear resistance element becomes more silicon-rich. However, there is a limit to the RF power because the stress inside the silicon nitride film becomes greater with increasing RF power and problems such as peeling of the film and current concentration occur.

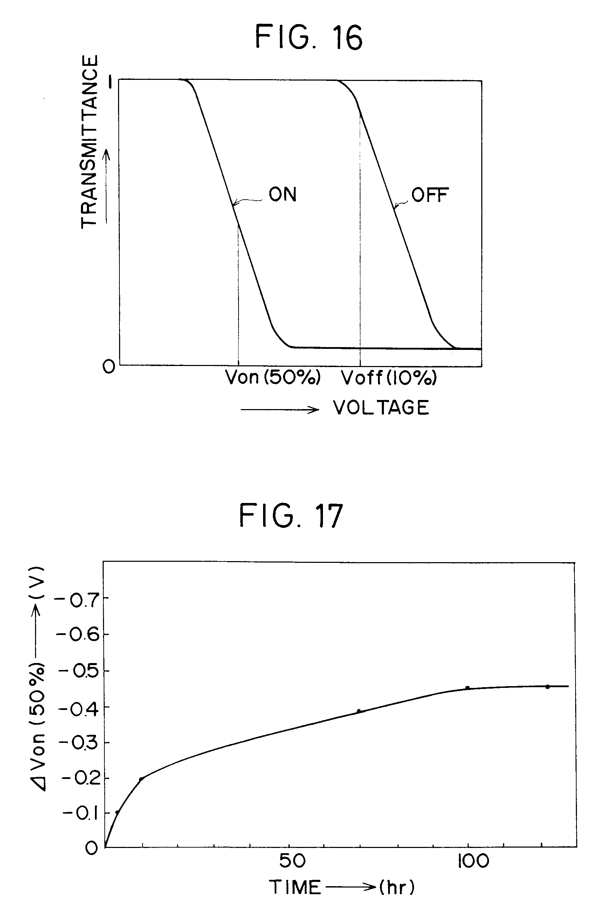

Figure 16 shows the voltage-v-transmittance of a liquid crystal display using a non-linear resistance element formed by conducting reactive sputtering using silicon as the target and argon gas containing 1 to 10% of N₂ gas to deposit a non-linear resistance thin film, and using ITO as the pixel electrode, and using material comprising aluminium and silicon as the metallic wiring electrode. The bias ratio is from 1/6 to 1/10 bias. The smaller the bias ratio, the greater the difference between Vₒₙ (50%) and V_{off} (10%), that is, the margin. However, since the voltage level between T - Tₒ in Figure 9(A) becomes greater, too, the resistance value of R₁ of Figure 8 drops and the leakage of the charge stored in C_{LC} increases. Accordingly, when the bias ratio is below 1/5 bias, the width of T - Tₒ becomes great in the case of multiple division (more than 400 division, for example) and the leakage quantity of the charge stored in C_{LC} through the non-linear resistance element in Tₒ becomes great. Therefore, the saturation voltage Vₛₐₜ of the liquid crystal cannot be reached even when the Vₒₚ voltage is raised. The optimum bias in this embodiment is 1/7 bias and the margin in this case is 5 to 6 V. The rise/fall response speed of the liquid crystal is 30 to 40 msec and is considerably faster than the response speed of ordinary Tn, STN liquid panels.

Figure 17 shows the mode of the shift quantity of Vₒₙ (50%) of the liquid crystal display produced in this embodiment with the passage of time. A shift of -0.4∼-0.5 V occurs within about 700 hours and saturation is attained. This voltage shift is in agreement with the shift quantity of the voltage-v-current characteristics of the non-linear resistance element but since it can be covered sufficiently by the margin 5 ∼ 6 V of Vₒₙ (50%) and V_{off} (10%) of the liquid crystal display, degradation of the display state with time cannot be observed at all.

In the electro-optical device of the present invention described above, any H contained in the a-Si base film is extremely small (H < 1wt%) and adverse influences due to the photo-electric effect can therefore be eliminated. Furthermore, asymmetry of polarity in the voltage-v-current characteristics can be eliminated and since the shift of the voltage is small, the difference of contrast between bright and dark environments does not occur, and an electro-optical device having non-uniformity of display and with less degradation with time but having an extremely good display state can be obtained.

From the production aspect, the production can be carried out safely because any harmful gas such as a silane gas need not be used and since the non-linear resistance film and the wiring electrode can be deposited continuously, the step time can be shortened and the production yield can be improved. Thus the present invention can provide an electro-optical device having a smaller number of defects or absolutely no defects at all.

Although the embodiment described above involves a two-terminal device such as a -SiNₓ and a-SiO₂ devices as the switching device, a similar effect can be obtained also from other two-terminal devices such as a-SiC_{y}, a-SiN_{P}O_{Q} TFTs, etc., by reducing the H content (below 1wt%) so long as a-Si is used as the base material.

## Claims

1. An electro-optical device, comprising a first substrate (11) and a plurality of pixel electrodes (12) and switching elements (14) on said first substrate (11), each switching element (14) comprising amorphous material consisting principally of silicon;
a second substrate (19) which faces said first substrate; an electro-optical layer (16) between the first and second substrates (19,11); and at least one polarizing member (20,21) through which the device is viewed; characterised in that
the amorphous material of each switching element (14) contains no hydrogen or has a hydrogen content of not more than 1% by weight.

2. A device according to claim 1, wherein the switching elements (14) are nonlinear resistive elements or TFT elements.

3. A device according to claim 1, wherein the electro-optical layer (16) comprises a layer of liquid crystal material.

4. An electro-optical device according to claim 1, 2 or 3, wherein each of the substrates (19,11) has a plurality of row electrodes (13) and a plurality of column electrodes (17) on the inner surface thereof.

5. A device according to any preceding claim, wherein said amorphous material consists substantially of SiNₓ or SiC_{y} or Si0_{z} or of silicon, nitrogen and oxygen.

6. A device according to claim 5, wherein the amorphous material is silicon-rich compared with the stoichiometric ratio.

7. A device according to any preceding claim, wherein the amorphous silicon has been deposited on a substrate (11) by sputtering.

8. A method of producing an electro-optical device comprising forming a plurality of pixel electrodes (12) and a plurality of switching elements (14) on a substrate (11), said switching elements having amorphous material consisting principally of silicon characterised in that
said amorphous material of each switching element (14) is deposited such that it contains no hydrogen or has a hydrogen content of not more than 1% by weight.

9. A method according to claim 8, wherein the amorphous silicon is deposited by sputtering.

10. A method according to claim 9, wherein said sputtering is effected by reactive sputtering in a gas using a target of silicon or a silicon compound.

11. A method according to claim 10, wherein said gas contains nitrogen, oxygen or carbon.

12. A method according to claim 10 or claim 11, wherein the target is made of single crystal silicon, polycrystal silicon or silicon oxide.

13. A method according to any of claims 8 to 12 wherein column electrodes (13) and the pixel electrodes (12) are also deposited by sputtering.

## Patentansprüche

1. Elektrooptische Vorrichtung, umfassend ein erstes Substrat (11) und eine Mehrzahl von Pixelelektroden (12) und Schaltelementen (14) auf dem ersten Substrat (11), wobei jedes Schaltelement (14) amorphes Material umfaßt, welches hauptsächlich aus Silizium besteht;
ein zweites Substrat (19), welches dem ersten Substrat gegenüberliegt; eine elektrooptische Schicht (16) zwischen dem ersten und dem zweiten Substrat (19,11); und wenigstens ein Polarisationselement (20,21), durch welches die Vorrichtung betrachtet wird;
dadurch gekennzeichnet, daß
das amorphe Material jedes Schaltelements (14) keinen Wasserstoff enthält oder einen Wasserstoffgehalt von nicht mehr als 1 Gew.-% aufweist.

2. Vorrichtung nach Anspruch 1, bei welcher die Schaltelemente (14) nichtlineare Widerstandselemente oder TFT-Elemente sind.

3. Vorrichtung nach Anspruch 1, bei welcher die elektrooptische Schicht (16) eine Schicht aus Flüssigkristallmaterial umfaßt.

4. Vorrichtung nach Anspruch 1, 2 oder 3, bei welcher jedes der Substrate (19,11) eine Mehrzahl von Zeilenelektroden (13) und eine Mehrzahl von Spaltenelektroden (17) an seiner inneren Oberfläche aufweist.

5. Vorrichtung nach einem der vorhergehenden Ansprüche, bei welcher das amorphe Material im wesentlichen aus SiNₓ oder SiC_{y} oder SiO_{z} oder aus Silizium, Stickstoff und Sauerstoff besteht.

6. Vorrichtung nach Anspruch 5, bei welcher das amorphe Material im Vergleich zum stöchiometrischen Verhältnis siliziumreich ist.

7. Vorrichtung nach einem der vorhergehenden Ansprüche, bei welcher das amorphe Silizium auf einem Substrat (11) durch Sputtern aufgebracht worden ist.

8. Verfahren zum Herstellen einer elektrooptischen Vorrichtung, umfassend Bilden einer Mehrzahl von Pixelelektroden (12) und einer Mehrzahl von Schaltelementen (14) auf einem Substrat (11), wobei die Schaltelemente (14) amorphes Material aufweisen, welches hauptsächlich aus Silizium besteht, dadurch gekennzeichnet, daß
das amorphe Material jedes Schaltelements (14) derart aufgebracht wird, daß es keinen Wasserstoff enthält oder einen Wasserstoffgehalt von nicht mehr als 1 Gew.-% aufweist.

9. Verfahren nach Anspruch 8, bei welchem das amorphe Silizium durch Sputtern aufgebracht wird.

10. Verfahren nach Anspruch 9, bei welchem das Sputtern durch reaktives Sputtern in einem Gas unter Verwendung eines Targets aus Silizium oder einer Siliziumverbindung bewirkt wird.

11. Verfahren nach Anspruch 10, bei welchem das Gas Stickstoff, Sauerstoff oder Kohlenstoff enthält.

12. Verfahren nach Anspruch 10 oder Anspruch 11, bei welchem das Target aus einkristallinem Silizium, polykristallinem Silizium oder Siliziumoxid gebildet ist.

13. Verfahren nach einem der Ansprüche 8 bis 12, bei welchem die Spaltenelektroden (13) und die Pixelelektroden (12) auch durch Sputtern aufgebracht werden.

## Revendications

1. Dispositif électrono-optique, comprenant un premier substrat (11) et une pluralité d'électrodes (12) de pixel et des commutateurs (14) sur le premier substrat (11), chaque commutateur (14) comprenant du matériau amorphe constitué principalement de silicium ;
un second substrat (19) faisant face au premier substrat ; une couche (16) électrono-optique entre les premier et second substrats (19,11) ; et au moins un élément (20,21) polarisateur par lequel on observe le dispositif ; caractérisé en ce que
le matériau amorphe de chaque commutateur (14) ne contient pas d'hydrogène ou a une teneur en hydrogène qui n'est pas supérieure à 1% en poids.

2. Dispositif selon la revendication 1, dans lequel les commutateurs (14) sont des éléments à résistivité non linéaire ou des éléments TFT.

3. Dispositif selon la revendication 1, dans lequel la couche (16) électrono-optique comprend une couche en cristal liquide.

4. Dispositif électrono-optique selon la revendication 1, 2 ou 3, dans lequel chacun des substrats (19,11) a une pluralité d'électrodes (13) de rangées et une pluralité d'électrodes (17) de colonne sur sa surface intérieure.

5. Dispositif selon l'une quelconque des revendications précédentes, dans lequel le matériau amorphe est composé essentiellement de SiNₓ ou SiC_{y} ou SiO_{z} ou de silicium, d'azote et d'oxygène.

6. Dispositif selon la revendication 5, dans lequel le matériau amorphe est riche en silicium comparativement au rapport stoechiométrique.

7. Dispositif selon l'une quelconque des revendications précédentes, dans lequel le silicium amorphe a été déposé sur le substrat (11) par pulvérisation cathodique.

8. Procédé de fabrication d'un dispositif électrono-optique comprenant la formation d'une pluralité d'électrodes (12) de pixels et d'une pluralité de commutateurs (14) sur un substrat (11), ces commutateurs étant en un matériau amorphe composé principalement de silicium, caractérisé en ce que le matériau amorphe de chaque commutateur (14) est déposé de manière qu'il ne contienne pas d'hydrogène ou que sa teneur en hydrogène ne soit pas supérieure à 1% en poids.

9. Procédé selon la revendication 8, dans lequel le silicium amorphe est déposé par pulvérisation cathodique.

10. Procédé selon la revendication 9, dans lequel cette pulvérisation cathodique est réalisée par pulvérisation cathodique réactive dans un gaz en utilisant une cible en silicium ou en un composé au silicium.

11. Procédé selon la revendication 10, dans lequel le gaz contient de l'azote, de l'oxygène ou du carbone.

12. Procédé selon la revendication 10 ou 11, dans lequel la cible est en silicium monocristallin, en silicium polycristallin ou en oxyde de silicium.

13. Procédé selon l'une quelconque des revendications 8 à 12, dans lequel les électrodes (13) de colonne et les électrodes (12) de pixel sont également déposées par pulvérisation cathodique.
